(19) Europäisches Patentamt
European Patent Office
Office européen des brevets

(11) **EP 1 561 624 B1**

(12) **FASCICULE DE BREVET EUROPEEN**

(45) Date de publication et mention
de la délivrance du brevet:
**25.07.2007   Bulletin 2007/30**

(51) Int Cl.:
***B60K 6/02*** *(2006.01)*

(21) Numéro de dépôt: **05300094.9**

(22) Date de dépôt: **04.02.2005**

(54) **PROCEDE DE CONTROLE DES DECISIONS DE CHANGEMENT DE MODE D'UNE TRANSMISSION INFINIMENT VARIABLE.**

Verfahren zur Überwachung von Entscheidungen über Wechseln der Betriebsart eines stufenlosen Getriebes

Method for controlling decisions of changing mode of a continuously variable transmission

(84) Etats contractants désignés:
**AT BE BG CH CY CZ DE DK EE ES FI FR GB GR HU IE IS IT LI LT LU MC NL PL PT RO SE SI SK TR**

(30) Priorité: **04.02.2004   FR 0450205**
**04.02.2004   FR 0450204**
**04.02.2004   FR 0450206**

(43) Date de publication de la demande:
**10.08.2005   Bulletin 2005/32**

(73) Titulaire: **RENAULT s.a.s.**
**92100 Boulogne Billancourt (FR)**

(72) Inventeurs:
• **Turpin, Thomas**
**91400, Orsay (FR)**
• **Royer, Laurent**
**75012, Paris (FR)**

(56) Documents cités:
**EP-A- 1 090 792          DE-A1- 10 049 514**
**FR-A- 2 823 281          US-A1- 2002 024 306**

EP 1 561 624 B1

## Description

La présente invention concerne le pilotage des transmissions automatiques à variation continue ou infiniment variables.

Plus précisément, elle se rapporte au contrôle des changements de modes d'une transmission infiniment variable à plusieurs modes de fonctionnement comprenant au moins deux voies parallèles de couplage contenant chacune un coupleur fermé sur un premier mode de fonctionnement et ouvert dans un second, les deux coupleurs étant fermés simultanément pendant une période de temporisation au cours des changements de mode.

Cette invention trouve une application privilégiée, mais non limitative, sur un dispositif de transmission du type comprenant au moins deux voies parallèles de transmission de puissance, une voie contenant une chaîne cinématique à démultiplication fixe, et une autre voie contenant un variateur de vit esse continu, composé de deux machines électriques.

EP 1090792 décrit un procédé de contrôle des décisions de changement de mode d'une transmission infiniment variable selon le préambule de la revendication 1.

Par la publication FR 2 823 281, on connaît un disposit if du type indiqué ci-dessus, selon lequel les différentes voies sont connectées, d'une part à un répartiteur mécanique d'entrée relié à une source d'énergie mécanique tel qu'un moteur thermique, et d'autre part à un répartiteur mécanique de sortie relié aux roues du véhicule. Les répartiteurs mécaniques d'entrée et de sortie sont de préférence, mais non obligatoirement, des trains épicycoïdaux.

Une telle transmission comporte deux modes principaux de fonctionnement, utilisant l'une ou l'autre des deux voies de couplage. Sur chaque mode, les moyens de couplage, ou coupleurs, de la voie de couplage non utilisée, sont ouverts, tandis que ceux de la voie de couplage utilisée sont fermés.

Selon la publication FR2 823 281, les changements de mode interviennent à certains points de fonctionnement particuliers de la transmission, correspondant au franchissement de seuils de rapports déterminés. Les changements de mode de la transmission sont déterminés en fonction de la cinématique d'ensemble de celle-ci en attribuant notamment à chaque mode de fonctionnement une plage de rapport déterminée. Ainsi à chaque point de fonctionnement de la transmission, celle-ci se trouve sur un mode de fonctionnement approprié.

Les changements de mode d'une telle transmission, sont donc déclenchés de manière à ce que le mode de transmission soit toujours compatible avec la cinématique de celle-ci au point de fonctionnement visé par le calculateur.

L'adoption à chaque instant, du mode de fonctionnement le plus approprié per met effectivement d'optimiser le fonctionnement de la transmission.

Toutefois, une mauvaise maîtrise des décisions de changement de mode peut introduire des oscillations parasites au niveau des systèmes de découplage ou coupleurs, qui sont ressenties par le conducteur. Par ailleurs, certains changements de mode peuvent s'avérer inutiles au regard du point de fonctionnement visé par le calculateur.

La présente invention vise à contrôler les décisions de changement de mode d'une transmission infiniment variable à dérivation de puissance.

Conformément à l'invention, le contrôle des décisions de changement de mode repose sur le calcul des régimes différentiels aux bornes des coupleurs de la transmission et l'élaborat ion d'une valeur prévisionnelle de ces régimes différentiels.

Le calcul des des ces variables peut utiliser notamment les coefficients d'une matrice permettant d'écrire les différentiels de régime entre l'entrée et la sortie de chaque coupleur en fonction des régimes d'entrée et de sortie de la transmission, et la consigne de régime d'entrée de la transmission au point de fonctionnement visé par le calculateur de la transmission à un instant donné.

L'invention propose qu'une décision de changement de mode soit imposée à la transmission si le différentiel de vitesse aux bornes du coupleur à fermer pour changer de mode, dépasse un premier seuil préétabli.

De préférence, le mode actif est conservé comme tel si le différentiel de vitesse aux bornes du coupleur ouvert sur ce mode dépasse un second seuil préétabli de signe opposé au premier.

Selon la publication FR 2823281, on contrôle sur chaque voie de couplage un régime de fonctionnement qui permet de conserver pour la transmission le même rapport de démultiplication global pendant la période de fermeture simultanée des coupleurs. A cet effet, le variateur de vitesses coopère avec un disposit if de synchronisat ion de vit esses en vue de contrôler les différentiels de vitesse entre l'entrée et la sortie des coupleurs, pour que les rapports d'entrée et de sortie du variateur restent constants pendant les changements de mode.

Les transitions entre deux modes successifs de la transmission doivent cependant être réalisées rapidement, sans à-coups ressentis par le conducteur et sans perturbation du régime du moteur thermique.

Dans ce but, la présente invention vise à optimiser le pilotage des moyens de couplage d'une transmission infiniment variable à deux modes de fonctionnement, pendant les opérations de changement de mode.

Plus précisément , elle propose que l'opération de changement comporte une phase de préparation consistant à annuler le différentiel de vitesse entre l'entrée et la sortie du coupleur ouvert sur un premier mode, avant de commencer à fermer ce coupleur.

De préférence, le différentiel de vitesse entre l'entrée et la sortie du premier coupleur est régulé à zéro pendant sa phase de fermeture, et les deux coupleurs ne présentent aucun glissement pendant leur phase de fermeture simultanée.

Toutefois, ces dispositions ne sont pas suffisant es pour optimiser le déroulement des opérations de changement de mode elles-mêmes.

Pour atteindre ce dernier objectif, et réduire en particulier la durée des changements de mode, l'invention propose d'exploit er la connaissance de la dynamique des coupleurs.

Plus précisément, elle prévoit de contrôler de façon anticipée les décisions de changement de mode d'une transmission infiniment variable à dérivation de puissance, de manière à réduire la durée des opérations de changement de mode.

Conformément à l'invention, un changement de mode est décidé par anticipation à un instant donné, si la variation de régime différentiel aux bornes de ce coupleur à l'issue d'une période déterminée, quitte le domaine du mode courant, par exemple en changeant de signe pendant cette période.

De préférence, le changement de mode est décidé seulement si la variation de régime différentiel entre les bornes de ce coupleur est inférieure à un premier seuil de variation préétabli, et que la valeur prévisionnelle du régime différentiel est inférieure à un premier seuil préétabli de différentiel prévisionnel.

D'autres caractéristiques et avantages de la présente invention apparaîtront clairement à la lecture de la description suivante d'un mode de réalisation non limitatif de celle-ci, en se reportant aux dessins annexés, sur lesquels :

- la figure 1 illustre la détermination d'une consigne de mode de fonctionnement ou « mode cible »,
- la figure 2 montre le passage du mode cible à la prise de décision,
- les figure 3A à 3D mettent en évidence sur un graphique l'existence de zones de consigne,
- les figure 4, et 5 illustrent le déroulement de changement de mode proposé par l'invention entre un premier mode A et un second mode B et par symétrie le passage du mode B au mode A,
- la figure 6 est un diagramme fonctionne! du procédé de l'invent ion,
- la figure 7 illustre la détermination d'une consigne de mode de f onct ionnement ou « mode cible », et
- la figure 8 résume les condit ions de passage du mode cible à la prise de décision effective de changement de mode

Comme indiqué plus haut, l'invention s'applique à une transmission infiniment variable à dérivation de puissance à deux modes de fonctionnement comportant deux coupleurs, fermés respectivement sur un premier et un second mode de fonctionnement, en respect ant des contraintes de changement de mode déterminées par la cinématique de la transmission.

Pour chacune des variables suivantes,

- Win : régime d' entrée de la transmission
- Wout : régime de sortie de la transmission
- DWa et DWb : régimes de rotation différentiels aux bornes des coupleurs,
  le calculateur de la transmission est capable d'élaborer par calcul matriciel une valeur de consigne ou valeur prévisionnelle, correspondant à leur valeur au point de fonctionnement visé :
- CWin : la consigne ou valeur prévisionnelle de régime d'entrée de la transmission
- CDWa et CDWb : les consignes ou valeurs prévisionnelles de régime différentiel aux bornes des coupleurs.

Il est ainsi possible d'écrire :

- $DWa = Fa\ (Win\ ,\ Wout)$
- $DWb = Fb\ (Win\ ,\ Wout)$
- $CDWa = Fa\ (CWin\ ,\ Wout)$
- $CDWb = Fb\ (CWin\ ,\ Wout)$

Fa et Fb étant des fonctions définies par les coefficients d'une matrice.

Sachant que le point optimal de changement de mode est tel que DWa et DWb sont nuls, les domaines autorisés sur chaque mode de fonctionnement par la cinématique de la transmission sont par construction : $DWa = 0$ avec $DWb > 0$ sur le mode A, et $DWa < 0$ avec $DWb = 0$ sur le mode B. Toutefois les signes algébriques de DWa et DWb étant purement conventionnels, on doit considérer que l'invention s'applique dans les mêmes conditions à une transmission pour laquelle on pourrait écrire : $DWb < 0$ en mode A et $DWa > 0$ en mode B.

Les figures mentionnent en outre différents seuils de valeurs pris en considération dans le procédé de contrôle proposé :

- SPa : Seuil Posit if de mode A
- SCa : Seuil de Consigne de mode A
- SNa : seuil Négatif de mode A
- SPb : seuil positif de mode B
- SCb: seuil de consigne de mode B
- SNb : seuil Négatif de mode B

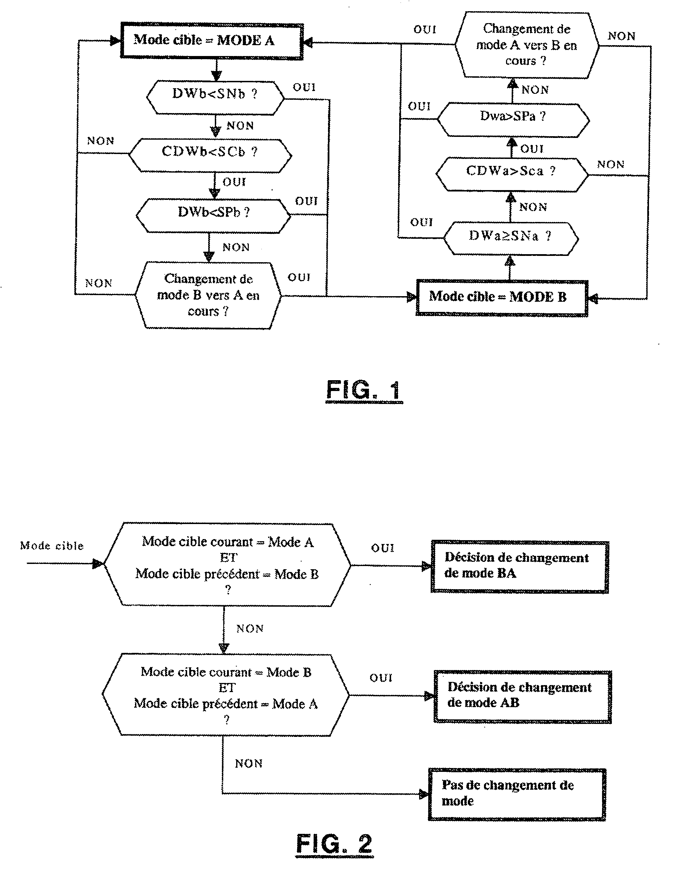

La figure 1 distingue deux sit uat ions appelées respectivement Mode cible = MODE A, et Mode cible = MODE B, selon que le mode établi ou prévisionnel en fonction du point de fonctionnement ciblé par le calculateur est le mode A ou le mode B. Conformément à ce schéma, on voit que le passage du Mode cible A au mode cible B est prévu lorsque DWb <SNb, c'est à dire lorsque le différentiel de vitesse aux bornes du coupleur ouvert DWb est inférieur en valeur algébrique à un premier seuil SNb dit seuil négatif de mode B. Sinon, si DWb > SNb, le même changement de Mode cible de A vers B est également prévu si la valeur prévisionnelle CDWb du même différent iel DWb est elle même inférieure à un seuil prévisionnel ou seuil de consigne SCb de mode B, et que DWb est inférieur à un second seuil SPb dit seuil posit if de mode B. Le changement de mode cible de A vers B est également prévu dans une troisième situation, lorsque la valeur prévisionnelle CDWb est inférieure à SCb, que DWb est supérieur à SPb, et qu'un changement de B vers A est en cours. Les conditions de changement de Mode cible de B vers A indiquées également sur la partie droite de la figure, sont analogues.

La figure 2, est destinée à mettre en évidence la distinction entre le changement de mode cible et la prise de décision effective de changement de mode, en fonction du mode cible déterminé par le calculateur. L'information d'entrée est le mode ciblé par le calculateur conformément à la figure 1. Si à un instant donné la cible est A, alors qu'elle était précédemment B, la décision de changement BA (passage de B à A) est prise. A l'inverse, la décision de changement AB (passage de A à B) est prise si le mode cible vient de changer de A à B. Enfin, si on n'est pas dans une des situations précédentes, le mode courant est conservé.

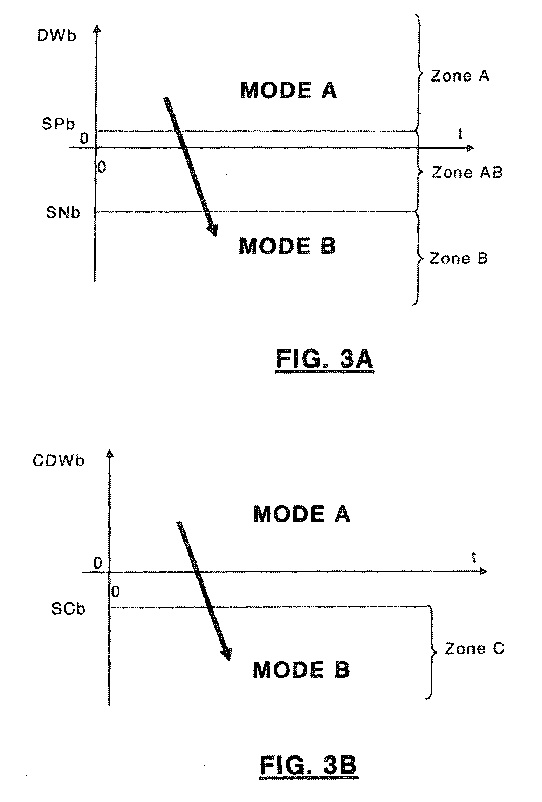

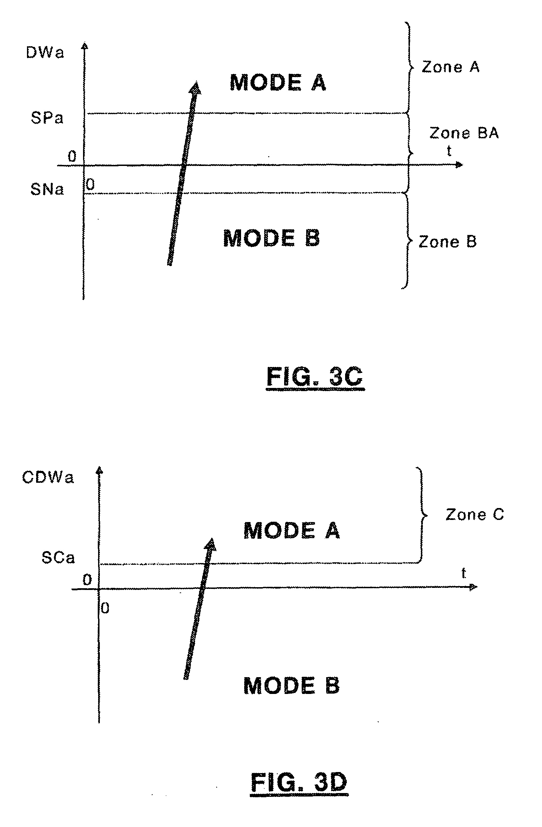

Les figures 3A et 3B illustrent les conditions de prise de décision de changement de mode à part ir du mode act if A.

Le mode actif à un instant initial (t = 0) étant le mode A, si ultérieurement DWb reste supérieur à SPb, le point de fonctionnement est en zone A, donc le mode A est conservé. Si DWb dépasse le seuil SNb (devient inférieur en valeur algébrique à celui-ci sur le schéma), on passe en zone B, donc le mode B est ciblé et le changement de mode AB est décidé.

Dans la zone AB, située entre les deux seuils SPb et SNb, la décision de changement de mode dépend de la valeur prévisionnelle CDWb du différentiel de vitesse DWb du coupleur à fermer pour changer de mode.

Si le différentiel de vitesse DWb aux bornes du coupleur à fermer (donc ouvert sur le mode actif) est compris entre les deux seuils préétablis SNb et SPb, et que sa valeur prévisionnelle CDWb est dans la zone C de la figure 3B (CDWb inférieur au seuil préétabli SCb), le changement de mode AB est imposé.

Enf in, si un changement de mode BA est déjà en cours et que CDWb entre dans la zone C, située en dessous du seuil SCb, le mode cible redevient B et le changement de mode BA est interrompu. Ainsi, le changement de mode BA est interrompu lorsque la valeur prévisionnelle CDWb dépasse le seuil SCb (devient inférieure en valeur algébrique à celui-ci sur le schéma).

Les figures 3C et 3D illustrent le changement de mode BA, et se lisent de la même façon que les figures 3A et 3B, en remplaçant A par B et B par A.

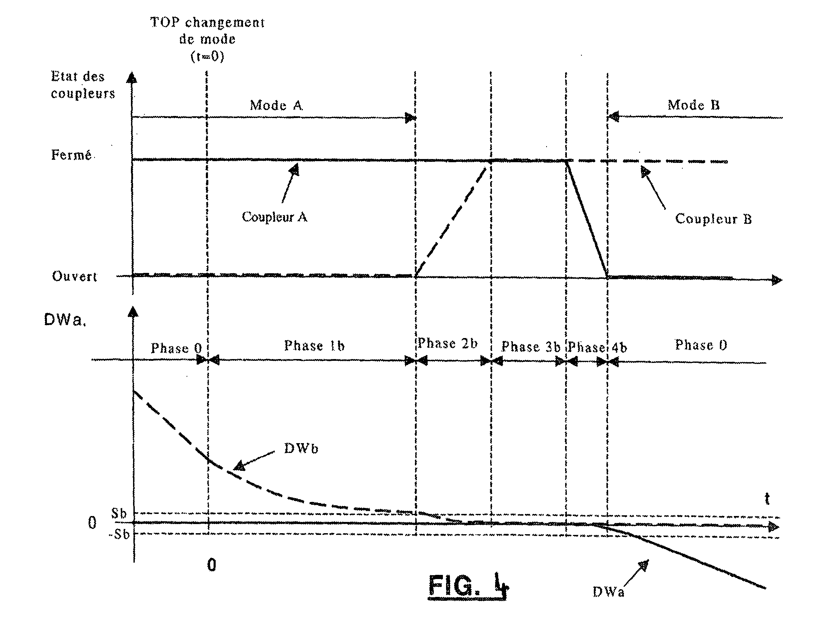

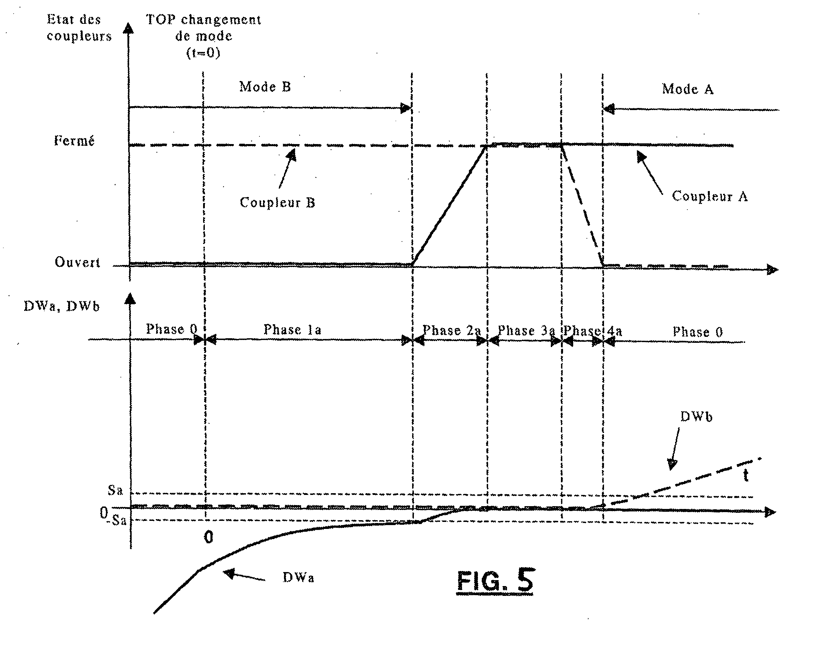

Sur les figures 4 et 5, on a représenté l'état en fonction du temps, de deux coupleurs d'une transmission infiniment variable à changement de mode telle que décrite dans la publication FR 2 823 281. Conformément à cette publication, dans un premier mode A le coupleur A d'une première voie de couplage est fermé tandis que celui de la seconde voie de couplage B est ouvert. A l'inverse en mode B, le coupleur B est fermé et le coupleur A est ouvert.

Dwa et DWb sont respectivement les différentiels de vitesse entre l'entrée et la sortie des coupleurs A et B, que l'on sait obtenir par calcul matriciel à partir des vitesses d'entrée et de sortie Win et Wout de la transmission.

Sachant qu'on a les relations suivantes :

$$DWa = Fa (Win , Wout)$$
$$DWb = Fb (Win , Wout)$$

où Fa et Fb sont des fonctions définies par les coefficients d'une matrice Z (par exemple telle que présentée dans la publication FR 2 823 281), et que le changement de mode inclut une phase de fermeture simultanée, sans glissement, des deux coupleurs, le procédé de l'invention prévoit :

- le passage par une phase où les deux coupleurs sont fermés, et
- de préposit ionner les coupleurs pour que $Dwa = DWb = 0$ pendant toute la durée des changements de mode.

Conformément à la figure 4, les différentes phases de l'opération de changement de mode A vers B sont les suivantes, à partir de l'instant t = 0 où la transmission est en mode A établi avec le système de découplage A fermé et le système de découplage B ouvert :

- phase 1b : annulation de DWb de sa valeur courante vers 0, le coupleur A étant maintenu fermé
- phase 2b : régulation de DWb à 0, en fermant le coupleur B, le coupleur A étant maintenu fermé
- phase 3b : régulation de DWa ou de DWb à 0, les coupleurs A et B étant maintenus fermés
- phase 4b : régulation de DWa à 0, avec ouverture du coupleur A, le coupleur B étant maintenu fermé

Ainsi, le mode B est établi à l'issue de la phase 4b, lorsque le coupleur A est complètement ouvert. La phase 1b est une phase préparatoire consistant à abaisser le différentiel DWb aux bornes du coupleur B vers 0, au seuil Sb près, avant de commencer à fermer ce coupleur. Pendant la phase 2b de fermeture du coupleur B, DWb est amené mécaniquement strictement à 0. Enfin, les phases 2b, 3b, 4b constituent l'opération de changement de mode proprement dite, c'est à dire l'inversion des coupleurs.

La figure 5, illustrant le changement de mode B vers A, est analogue à la précédente. On y trouve les phases 1a à 4a correspondant aux phases 1b à 4b de la figure 1 :

- phase 1a : annulation de DWa
- phase 2a : Régulation de DWa à 0 ,
- phase 3a : régulation de DWa ou de DWb à 0 , avec fermeture simultanée des deux coupleurs,
- phase 4a : régulat ion de DWb à 0 , avec ouvert ure du coupleur B, en maintenant le coupleur A fermé

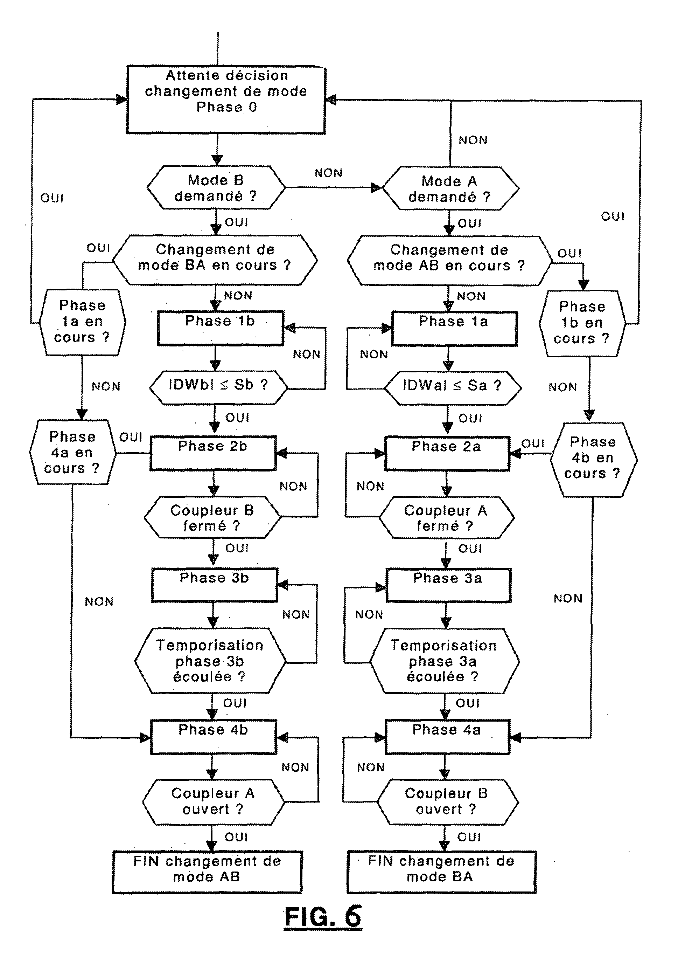

L'organigramme de la figure 6 montre dans sa partie gauche la décomposit ion du changement de mode AB (de A vers B) dans ses différentes phases 1b à 4b, à partir du moment où ce changement est demandé (top de changement de mode). Le calculateur vérifie alors si un changement de mode BA (de B vers A) est en cours ou non. Si un changement de mode BA est en cours, et que la phase 1a est en cours, le calculateur replace la transmission en mode A (phase 0 = attente de changement de mode). Sinon, soit c'est la phase 4a qui est en cours, auquel cas le calculateur reprend le déroulement du changement de mode AB direct ement en phase 2b, soit c'est une autre phase du mode BA qui est en cours, auquel cas le calculateur reprend le déroulement du changement de mode AB en phase 4b.

Lorsqu'un changement de mode BA n'est pas en cours lors de la demande de AB, ce dernier est lancé (phase 1b). Lorsque le différentiel de vitesse DWb est passé sous le seuil Sb, on passe en phase 2b (fermeture du coupleur B), puis en phase 3b, lorsque cette fermeture est effective.

A l'issue d'une période de temporisation prédéterminée (pouvant être nulle), l'ouverture du coupleur A commence (phase 4b). L'opération de changement de mode est terminée lorsque le coupleur A est complètement ouvert.

La partie droite de la figure 6, qui détaille l'opération de changement de changement de mode BA, se lit de la même façon que la partie gauche.

Conformément à l'invention, dès que la consigne de changement de mode change, la boucle de contrôle de la figure 6 doit être à nouveau initialisée pour permettre les interruptions. Par ailleurs, différentes possibilités de basculer de AB vers BA et inversement existent. En particulier, si le changement de consigne intervient en phase 1b ou 1a, on retourne en phase 0. En revanche, si on met en correspondance les figures 1 et 2, on voit qu'on peut passer directement de 2b en 4a, de 4b en 2a, de 2a en 4b, de 4a en 2b, de 3a en 4b et de 3b en 4a.

En conclusion, l'invention définit un procédé de contrôle des changements de mode d'une transmission infiniment variable, reposant sur la décomposition des différentes phases nécessaires à la réalisation d'un changement de mode. Ce procédé respecte notamment les conditions définies dans la publication FR2823281. L'invention permet de réaliser le changement de mode désiré, rapidement et sans à-coups, en respectant les contraintes suivant es :

- continuité de couple à la roue par activation simultanée de deux modes,
- conservation du rapport de transmission pendant les phases transitoires de changement de mode
- régulation de la vitesse différentielle aux bornes des coupleurs, pour les prépositionner et contrôler leurs positions pendant toute la durée des changement de mode
- possibilité d'interruption du processus de changement de mode, si une décision de changement de mode antagoniste est émise.

Le passage d'un mode de transmission à l'autre doit notamment être déclenché au moment opportun pour que le mode courant de la transmission soit toujours dans domaine acceptable pour la cinématique d'ensemble de la transmission, et pour que à chaque instant, le point de fonctionnement de la transmission soit proche du point de fonctionnement respectant des contraintes de changement de mode définies, par exemple comme dans la publication FR 2 823 281.

Pour chacune des variables suivantes,

- Win : régime d' entrée de la transmission
- Wout : régime de sortie de la transmission
- DWa et DWb : régimes de rotation différentiels aux bornes des coupleurs A et B,
  le calculateur de la transmission est capable d'élaborer par calcul matriciel une valeur de consigne ou valeur prévisionnelle, correspondant à leur valeur au point de fonctionnement visé :
- CWin : consigne ou valeur prévisionnelle de régime d'entrée de la transmission
- CDWa et CDWb : consignes ou valeurs prévisionnelles de régime dif f érent iel aux bornes des coupleurs A et B.

Il est ainsi possible d'écrire :

- DWa = Fa (Win , Wout)
- DWb = Fb (Win , Wout)
- CDWa = Fa (CWin , Wout)
- CDWb = Fb (CWin , Wout)

Fa et Fb étant des fonctions définies par les coefficients d'une matrice.

Conformément à l'invent ion, le contrôle des décisions de changement de mode exploite aussi les variables suivantes :

- gradCDWa et gradCDWb : variations des valeurs de régime différentiel prévisionnel aux bornes des coupleurs A et B (dérivée, gradient, gradient glissant, ..)
- gradDWa et gradDWb : variations des régimes différentiels aux bornes des coupleurs A et B. (dérivée, gradient, gradient glissant, ..)
- xa et xb : durée de fermeture des coupleurs A et B
- DWa(t+xa) et DWb(t+xb) : régimes de rotation différentiels anticipés aux bornes des coupleurs A et B qui seront atteints xa et xb secondes après l'instant courant t :

$$DWa(t+xa) = Dwa(t) + grad(DWa)^*xa$$

Sachant que le point optimal de changement de mode est tel que DWa et DWb sont nuls, les domaines autorisés sur chaque mode de fonctionnement par la cinématique de la transmission sont par construction : DWa = 0 avec DWb > 0 sur le mode A, et DWa < 0 avec DWb = 0 sur le mode B. Toutefois les signes algébriques de DWa et DWb étant choisis arbitrairement, on peut tout aussi bien retenir les conventions inverses, et décider que DWb <0 en mode A et DWa >0 en mode B.

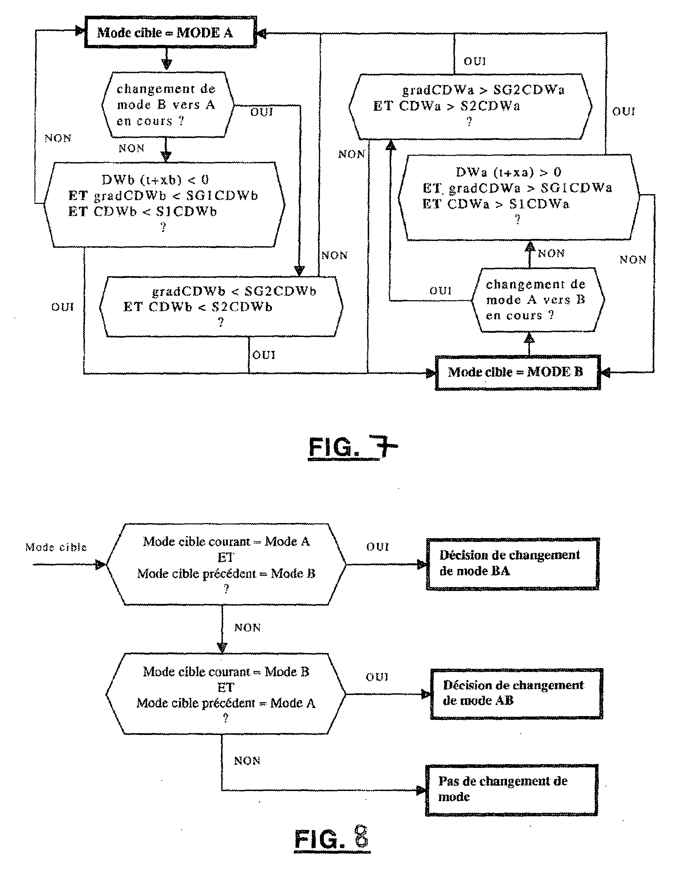

La figure 7 indique également les différents seuils de valeurs pris en considération dans le procédé de contrôle proposé :

- SG1CDWa et SG1CDWb : premiers seuils de variation de valeur prévisionnelle de régime différentiel aux bornes ces coupleurs A et B
- SG2CDWa et SG2CDWb : deuxièmes seuils de variation de valeur prévisionnelle de régime différentiel aux bornes des coupleurs A et B,
- S1CDWa et S1CDWb : premier seuil de régime dif f érent iel prévisionnel aux bornes des coupleurs A et B
- S2CDWa et S2CDWb : deuxième seuil de dif f érent iel de régime prévisionnel aux bornes des coupleurs A et B

La figure 7 distingue deux situations appelées respectivement Mode cible = MODE A, et Mode cible = MODE B, selon que le mode établi ou en cours d'établissement (changement AB ou BA en cours), est le mode A ou le mode B.

Si à un instant t, le mode cible est le mode A, on voit que la première vérification de la boucle de contrôle est de savoir si ce mode est effectivement établi (mode courant), ou non (changement de mode BA en cours).

Dans le premier cas, le mode cible, ou consigne de mode passe par anticipation de A à B à cet instant, pour autant que trois condit ions soient remplies :

- si le régime différentiel DWb(t+xb) à l'instant t+xb aux bornes du coupleur B ouvert sur le mode courant a quitté le domaine du mode A, en étant de signe opposé au différentiel de régime aux bornes du même coupleur à l'instant t ,
- si la variation de régime différentiel prévisionnelle gradCDWb à l'instant t aux bornes du coupleur B est inférieure à un premier seuil de gradient prévisionnel préétabli SG1CDWb, et

- si la valeur prévisionnelle CDWb du régime différentiel aux bornes du coupleur B est inférieure à un premier seuil de régime différentiel prévisionnel S1CDWb préétabli.

Dans l'autre cas, c'est à dire si un changement de mode BA est en cours, le mode cible passe de A à B lorsque les deux conditions suivantes sont remplies :

- la variation de régime différentiel prévisionnel gradCDWb aux bornes du coupleur à fermer pour réintroduire le mode B est inférieure à un second seuil de gradient de régime SG2CDWb préétabli, et
- le différentiel de régime prévisionnel CDWb aux bornes du coupleur B est inférieur à un second seuil de différent iel de régime prévisionnel S2CDWb préétabli.

Enfin, lorsque un changement de mode BA est en cours et que ces deux dernières conditions ne sont pas remplies simultanément, la consigne n'est pas inversée et le mode cible reste le mode A, ce qui signifie que le changement de mode BA se poursuit.

Conformément à l'invent ion, les condit ions de changement de mode cible à partir de la consigne de mode B indiquées sur la partie droite de la figure 7 sont analogues par symétrie à celles qui viennent d'être décrites.

La figure 8, est simplement destinée à mettre en évidence la distinction entre le changement de mode cible et la prise de décision effective de changement de mode, en fonction du mode cible déterminé par le calculateur. L'information d'entrée est le mode ciblé par le calculateur conformément à la figure 7. Si à un instant donné la cible est A, alors qu'elle était précédemment B, la décision de changement BA (passage de B à A) est prise. A l'inverse, la décision de changement AB (passage de A à B) est prise si le mode cible vient de passer de A à B. Enfin, si on n'est pas dans une des situations précédentes, le mode courant est conservé. Comme la figure 7, la figure 8 peut se lire de la même façon en inversant la désignation des modes A et B.

En conclusion, on voit que conformément à l'invention, l'élaboration la génération de la consigne de changement de mode s' appuie sur :

- l'élaboration des régimes différentiels aux bornes des systèmes de découplage,
- l'élaboration de consignes de ces mêmes régimes dif f érent iels, et
- une estimation de la durée de fermeture du coupleur concerné.

Ainsi, le procédé de contrôle proposé par l'invention exploite la connaissance de la dynamique des coupleurs, de manière à réduire la durée de changement de mode ef f ect if et à éviter les oscillations de la consigne de changement de mode lorsque le point de fonctionnement de la transmission est proche du point de f onct ionnement opt i mal de changement de mode.

En ef f et , l'invention per met de décl ench er prématurément la décision de changement de mode, par prévision de l' évolut ion du coupleur ouvert sur le mode courant, et de l'instant d' annulat ion du dif f érent iel de vit esse aux bornes de ce coupleur.

Grâce à l'invention, la durée d'annulation du différentiel de vitesse aux bornes du coupleur concerné, coïncide avec sa durée de fermeture, de sorte que la durée totale de l'opération de changement de mode est réduite du temps normalement nécessaire pour égaliser les vitesses aux bornes du coupleur ouvert sur le mode courant avant de commencer à fermer ce dernier.

## Revendications

1. Procédé de contrôle des décisions de changement de mode d'une transmission infiniment variable à plusieurs modes de fonctionnement (A, B) comprenant au moins deux voies parallèles de couplage contenant chacune un coupleur fermé sur un premier mode de fonctionnement (A) et ouvert dans un second (B), les deux coupleurs étant fermés simultanément pendant une période de temporisation au cours des changements de modes, **caractérisé en ce que** la décision de changement de mode est imposée à la transmission si le différentiel de vitesse (DWb, DWa) aux bornes du coupleur à fermer pour changer de mode, dépasse un premier seuil préétabli (SNb, SPa).

2. Procédé de contrôle selon la revendication 1, **caractérisé en ce** le mode actif est conservé comme tel si le différentiel de vitesse (DWb, DWa) aux bornes du coupleur ouvert sur ce mode dépasse un second seuil préétabli (SPb, SNa) de signe opposé au premier.

3. Procédé de contrôle selon la revendication 2, **caractérisé en ce qu'**entre les deux seuils (SNb, SPa ; SPb, SNa), la prise d'une décision de changement de mode dépend d'une valeur prévisionnelle (CDWb, CDWa) du différentiel de vitesse du coupleur ouvert.

4. Procédé de contrôle selon la revendication 3, **caractérisé en ce que** une décision de changement de mode est imposée si le différentiel de vitesse (DWb, DWa) aux bornes du coupleur ouvert sur le mode actif est situé entre les deux premiers seuils (SNb, SPa ; SPb, SNa) et que la valeur prévisionnelle (CDWb, CDWa) de ce différentiel dépasse un troisième seuil préétabli (SCb, SCa).

5. Procédé de contrôle selon la revendication 3 ou 4, **caractérisé en ce que** le changement de mode en cours est interrompu si un changement de mode est en cours et que la valeur prévisionnelle (CDWb, CDWa) du différentiel de vitesse aux bornes du coupleur à fermer dépasse un troisième seuil préétabli (SCb, SCa).

6. Procédé de contrôle selon l'une des revendications 1 à 5 **caractérisé en ce que** l'opération de changement comporte une phase de préparat ion (1a, 1b) consistant à annuler le différentiel de vitesse (DWa, DWb) entre l'entrée et la sortie du coupleur ouvert sur un premier mode, avant de commencer à fermer ce coupleur.

7. Procédé de contrôle selon la revendication 6, **caractérisé en ce** l'opération de changement de mode présente une phase préparatoire (1a, 1b) de suppression du glissement à l'intérieur d'un premier coupleur, suivie de phases transitoires de fermeture de ce premier coupleur (2a, 2b), de maintien simultané en position de fermeture de deux coupleurs (3a, 3b), et d'ouverture du second coupleur avec maintien du premier coupleur en position de fermeture (4a,4b).

8. Procédé de contrôle selon la revendication 7, **caractérisé en ce que** le différentiel de vitesse entre l'entrée et la sortie du premier coupleur est régulé à zéro pendant sa phase de fermeture (2a, 2b).

9. Procédé de contrôle selon la revendication 6, 7 ou 8, **caractérisé en ce que** les deux coupleurs ne présentent aucun glissement pendant leur phase de fermeture simultanée.

10. Procédé de contrôle selon l'une des revendications 6 à 9, **caractérisé en ce que** la boucle de contrôle des opérations de changement de mode est initialisée dès que la consigne de changement de mode change.

11. Procédé de contrôle selon l'une des revendications 6 à 10, **caractérisé en ce qu**'une inversion de consigne de changement de mode pendant la phase de fermeture d'un coupleur (2a, 2b) se traduit par un passage direct à la phase d'ouverture du même coupleur (4b, 4a) dans l'opération de changement de mode inverse.

12. Procédé de contrôle selon l'une des revendications 6 à 11, **caractérisé en ce qu**'une inversion de consigne de changement de mode pendant la phase d'ouverture d'un coupleur (4a, 4b) se traduit par un passage direct à la phase de fermeture du même coupleur (2b, 2a) dans l'opération de changement de mode inverse.

13. Procédé de contrôle selon l'une des revendications 1 à 12, **caractérisé en ce qu**'un changement de mode est décidé par anticipation à un instant t si le différentiel de régime [DWa(t +xa), DWb(t+xb)] aux bornes du coupleur ouvert sur le mode courant à l'issue d'une période prédéterminée xa, xb, quitte le domaine du mode courant.

14. Procédé de contrôle selon la revendication 13, **caractérisé en ce qu**'un changement de mode est décidé si le différentiel de régime [DWa(t+xa), DWb(t+xb)] à l'issue de la période xa, xb, est de signe opposé à celui de l'instant t.

15. Procédé de contrôle selon la revendication 13 ou 14, **caractérisé en ce qu**'un changement de mode est décidé si la variation de différentiel de régime prévisionnel (gradCDWa, gradCDWb) entre l'instant t et l'instant t+a, t+b, est inférieure ou égale à un premier seuil de variation préétabli (SG1CDWa, SG1CDWb).

16. Procédé de contrôle selon la revendication 15, **caractérisé en ce qu**'un changement de mode est décidé lorsque la valeur prévisionnelle (CDWa, CDWb) de régime différentiel aux bornes du différentiel à fermer sur le nouveau mode ciblé est inférieure à un premier seuil de régime prévisionnel préétabli (S1CDWa, S1CDWb).

17. Procédé selon l'une des revendications 13 à 16, **caractérisé en ce que** la décision de changement de mode est inversée si la variation de différentiel de régime prévisionnel (gradCDWa), gradCDWb) aux bornes du coupleur à fermer pour réintroduire ce mode est inférieure à un second seuil de variation préétabli (SG2CD, SG2CDWb).

18. Procédé de contrôle selon la revendication 17 **caractérisé en ce que** la décision de changement de mode est inversée si le différentiel de régime prévisionnel (CDWa, CDWb) aux bornes de ce récepteur est inférieur à un second seuil de régime prévisionnel préétabli (S2CDWa, S2CDWb).

**Claims**

1. Method of controlling the change-of-mode decisions of an infinitely variable transmission with several operating modes (A, B) comprising at least two parallel coupling pathways each containing a coupler closed for a first operating mode (A) and open in a second (B), the two couplers being simultaneously closed for a dwell period during the changes of mode, **characterized in that** the change-of-mode decision is imposed on the transmission if the speed differential (DWb, DWa) across the terminals of the coupler to be closed in order to change mode, exceeds a first pre-established threshold (SNb, SPa).

2. Method of control according to Claim 1, **characterized in that** the active mode is preserved as such if the speed differential (DWb, DWa) across the terminals of the coupler that is open for this mode exceeds a second pre-established threshold (SPb, SNa) of opposite sign to the first.

3. Method of control according to Claim 2, **characterized in that** between the two thresholds (SNb, SPa; SPb, SNa), the taking of a change-of-mode decision depends on a forecast value (CDWb, CDWa) of the speed differential of the open coupler.

4. Method of control according to Claim 3, **characterized in that** a change-of-mode decision is imposed if the speed differential (DWb, DWa) across the terminals of the coupler that is open for the active mode lies between the first two thresholds (SNb, SPa; SPb, SNa) and the forecast value (CDWb, CDWa) of this differential exceeds a third pre-established threshold (SCb, SCa).

5. Method of control according to Claim 3 or 4, **characterized in that** the change of mode in progress is interrupted if a change of mode is in progress and the forecast value (CDWb, CDWa) of the speed differential across the terminals of the coupler to be closed exceeds a third pre-established threshold (SCb, SCa).

6. Method of control according to one of Claims 1 to 5 **characterized in that** the change operation comprises a preparation phase (1a, 1b) consisting in zeroing the speed differential (DWa, DWb) between the input and the output of the coupler that is open for a first mode, before beginning to close this coupler.

7. Method of control according to Claim 6, **characterized in that** the change-of-mode operation exhibits a preparatory phase (1a, 1b) of eliminating the slippage inside a first coupler, followed by transient phases of closing of this first coupler (2a, 2b), of simultaneous maintaining of two couplers (3a, 3b) in the closed position, and of opening of the second coupler while maintaining the first coupler in the closed position (4a,4b).

8. Method of control according to Claim 7, **characterized in that** the speed differential between the input and the output of the first coupler is regulated to zero during its closing phase (2a, 2b).

9. Method of control according to Claim 6, 7 or 8, **characterized in that** the two couplers do not exhibit any slippage during their simultaneous closing phase.

10. Method of control according to one of Claims 6 to 9, **characterized in that** the loop for controlling the change-of-mode operations is initialized as soon as the change-of-mode setpoint changes.

11. Method of control according to one of Claims 6 to 10, **characterized in that** a reversal of change-of-mode setpoint during the closing phase of a coupler (2a, 2b) gives rise to a direct switch to the opening phase of the same coupler (4b, 4a) in the reverse change-of-mode operation.

12. Method of control according to one of Claims 6 to 11, **characterized in that** a reversal of change-of-mode setpoint during the opening phase of a coupler (4a, 4b) gives rise to a direct switch to the closing phase of the same coupler (2b, 2a) in the reverse change-of-mode operation.

13. Method of control according to one of Claims 1 to 12, **characterized in that** a change of mode is decided by anticipation at an instant t if the engine speed differential [DWa(t+xa), DWb(t+xb)] across the terminals of the coupler that is open for the current mode on completion of a predetermined period xa, xb, departs from the domain of the current mode.

14. Method of control according to Claim 13, **characterized in that** a change of mode is decided if the engine speed differential [DWa(t+xa), DWb(t+xb)] on completion of the period xa, xb, is of opposite sign to that of the instant t.

15. Method of control according to Claim 13 or 14, **characterized in that** a change of mode is decided if the variation in forecast engine speed differential (gradCDWa, gradCDWb) between the instant t and the instant t+a, t+b, is less than or equal to a first pre-established variation threshold (SG1CDWa, SG1CDWb).

16. Method of control according to Claim 15, **characterized in that** a change of mode is decided when the forecast value (CDWa, CDWb) of differential engine speed across the terminals of the differential to be closed for the new targeted mode is less than a first pre-established forecast engine speed threshold (S1CDWa, S1CDWb).

17. Method according to one of Claims 13 to 16, **characterized in that** the change-of-mode decision is reversed if the variation in forecast engine speed differential (gradCDWa), gradCDWb) across the terminals of the coupler to be closed in order to reintroduce this mode is less than a second pre-established variation threshold (SG2CD, SG2CDWb).

18. Method of control according to Claim 17 **characterized in that** the change-of-mode decision is reversed if the forecast engine speed differential (CDWa, CDWb) across the terminals of this receiver is less than a second pre-established forecast engine speed threshold (S2CDWa, S2CDWb).

**Patentansprüche**

1. Verfahren zur Überwachung von Entscheidungen über Wechseln der Betriebsart eines stufenlosen Getriebes mit mehreren Betriebsarten (A, B), umfassend mindestens zwei parallele Kupplungswege, die jeweils einen Koppler enthalten, der bei einer ersten Betriebsart (A) geschlossen und bei einer zweiten (B) geöffnet ist, wobei die beiden Koppler gleichzeitig während einer Verzögerungsperiode während der Betriebsartwechsel geschlossen sind, **dadurch gekennzeichnet, dass** die Entscheidung über einen Betriebsartwechsel dem Getriebe auferlegt wird, wenn das Geschwindigkeitsdifferential (DWb, DWa) an den Klemmen des Kopplers, der zum Betriebsartwechsel zu schließen ist, einen ersten vorgegebenen Schwellwert (SNb, SPa) überschreitet.

2. Überwachungsverfahren nach Anspruch 1, **dadurch gekennzeichnet, dass** die aktive Betriebsart als solche erhalten bleibt, wenn das Geschwindigkeitsdifferential (DWb, DWa) an den Klemmen des Kopplers, der in dieser Betriebsart geöffnet ist, einen zweiten vorgegebenen Schwellwert (SPb, SNa) mit einem dem ersten entgegengesetzten Vorzeichen überschreitet.

3. Überwachungsverfahren nach Anspruch 2, **dadurch gekennzeichnet, dass** zwischen den beiden Schwellwerten (SNb, SPa; SPb, SNa) das Treffen einer Entscheidung über ein Wechseln der Betriebsart von einem voraussichtlichen Wert (CDWb, CDWa) des Geschwindigkeitsdifferentials des geöffneten Kopplers abhängt.

4. Überwachungsverfahren nach Anspruch 3, **dadurch gekennzeichnet, dass** eine Entscheidung über ein Wechseln der Betriebsart auferlegt wird, wenn das Geschwindigkeitsdifferential (DWb, DWa) an den Klemmen des bei der aktiven Betriebsart geöffneten Kopplers zwischen den beiden ersten Schwellwerten (SNb, SPa; SPb, SNa) liegt und der voraussichtliche Wert (CDWb, CDWa) dieses Differentials einen dritten vorgegebenen Schwellwert (SCb, SCa) überschreitet.

5. Überwachungsverfahren nach Anspruch 3 oder 4, **dadurch gekennzeichnet, dass** das Wechseln der derzeitigen Betriebsart unterbrochen wird, wenn ein Wechseln der Betriebsart abläuft und der voraussichtliche Wert (CDWb, CDWa) des Geschwindigkeitsdifferentials an den Klemmen des zu schließenden Kopplers einen dritten vorgegebenen Schwellwert (SCb, SCa) überschreitet.

6. Überwachungsverfahren nach einem der Ansprüche 1 bis 5, **dadurch gekennzeichnet, dass** der Arbeitsgang des Wechselns eine Vorbereitungsphase (1a, 1b) umfasst, die darin besteht, das Geschwindigkeitsdifferential (DWa, DWb) zwischen dem Eingang und dem Ausgang des in der ersten Betriebsart geöffneten Kopplers zu annullieren, bevor mit dem Schließen dieses Kopplers begonnen wird.

7. Überwachungsverfahren nach Anspruch 6, **dadurch gekennzeichnet, dass** der Arbeitsgang des Wechselns der Betriebsart eine vorbereitende Phase (1a, 1b) des Aufhebens der Verschiebung innerhalb des ersten Kopplers aufweist, auf die Übergangsphasen des Schließens dieses ersten Kopplers (2a, 2b), des gleichzeitigen Erhaltens der beiden Koppler (3a, 3b) in Schließstellung und des Öffnens des zweiten Kopplers mit Erhalten des ersten Kopplers in Schließstellung (4a, 4b) folgen.

8. Überwachungsverfahren nach Anspruch 7, **dadurch gekennzeichnet, dass** das Geschwindigkeitsdifferential zwischen dem Eingang und dem Ausgang des ersten Kopplers während seiner Schließphase (2a, 2b) auf Null reguliert ist.

9. Überwachungsverfahren nach Anspruch 6, 7 oder 8, **dadurch gekennzeichnet, dass** die beiden Koppler keine Verschiebung während ihrer gleichzeitigen Schließphase aufweisen.

10. Überwachungsverfahren nach einem der Ansprüche 6 bis 9, **dadurch gekennzeichnet, dass** die Schleife zum Überwachen der Vorgänge des Wechselns der Betriebsart initialisiert wird, sobald sich die Anweisung zum Betriebsartwechsel ändert.

11. Überwachungsverfahren nach einem der Ansprüche 6 bis 10, **dadurch gekennzeichnet, dass** eine Umkehrung der Anweisung zum Betriebsartwechsel während der Schließphase eines Kopplers (2a, 2b) sich durch einen direkten Übergang auf die Öffnungsphase des gleichen Kopplers (4b, 4a) bei dem Arbeitsgang des umgekehrten Betriebsartwechsels äußert.

12. Überwachungsverfahren nach einem der Ansprüche 6 bis 11, **dadurch gekennzeichnet, dass** eine Umkehrung der Anweisung zum Betriebsartwechsel während der Öffnungsphase eines Kopplers (4a, 4b) sich durch einen direkten Übergang auf die Schließphase des gleichen Kopplers (2b, 2a) bei dem Arbeitsgang des umgekehrten Betriebsartwechsels äußert.

13. Überwachungsverfahren nach einem der Ansprüche 1 bis 12, **dadurch gekennzeichnet, dass** ein Betriebsartwechsel im Voraus zu einem Zeitpunkt t entschieden wird, wenn das Drehzahldifferential [DWa(t+xa), DWb(t+xb)] an den Klemmen des in der derzeitigen Betriebsart geöffneten Kopplers nach einer vorherbestimmten Periode xa, xb den Bereich der derzeitigen Betriebsart verlässt.

14. Überwachungsverfahren nach Anspruch 13, **dadurch gekennzeichnet, dass** ein Betriebsartwechsel entschieden wird, wenn das Drehzahldifferential [DWa(t+xa), DWb(t+xb)] nach der Periode xa, xb, ein Vorzeichen aufweist, das dem zu dem Zeitpunkt t entgegengesetzt ist.

15. Überwachungsverfahren nach Anspruch 13 oder 14, **dadurch gekennzeichnet, dass** ein Betriebsartwechsel entschieden wird, wenn die Variation des voraussichtlichen Drehzahldifferentials (gradCDWa, gradCDWb) zwischen dem Zeitpunkt t und dem Zeitpunkt t+a, t+b kleiner oder gleich einem ersten vorgegebenen Variationsschwellwert (SG1CDWa, SG1CDWb) ist.

16. Überwachungsverfahren nach Anspruch 15, **dadurch gekennzeichnet, dass** ein Betriebsartwechsel entschieden wird, wenn der voraussichtliche Wert (CDWa, CDWb) des Drehzahldifferentials an den Klemmen des in der neuen angestrebten Betriebsart zu schließenden Differentials kleiner ist als ein erster vorgegebener voraussichtlicher Drehzahlschwellwert (S1CDWa, S1CDWb).

17. Überwachungsverfahren nach einem der Ansprüche 13 bis 16, **dadurch gekennzeichnet, dass** die Entscheidung über ein Wechseln der Betriebsart umgekehrt wird, wenn die Variation des voraussichtlichen Drehzahldifferentials (gradCDWa, gradCDWb) an den Klemmen des zu schließenden Kopplers, um diese Betriebsart wieder einzuführen, kleiner als ein zweiter vorgegebener Variationsschwellwert (SG2CD, SG2CDb) ist.

18. Überwachungsverfahren nach Anspruch 17, **dadurch gekennzeichnet, dass** die Entscheidung über ein Wechseln der Betriebsart umgekehrt wird, wenn das voraussichtliche Drehzahldifferential (CDWa, CDWb) an den Klemmen dieses Empfängers kleiner als ein zweiter vorgegebener voraussichtlicher Drehzahlschwellwert (S2CDWa, S2CDWb) ist.

Mode cible = MODE A

DWb<SNb ?

CDWb<SCb ?

DWb<SPb ?

Changement de mode B vers A en cours ?

Changement de mode A vers B en cours ?

Dwa>SPa ?

CDWa>Sca ?

DWa≥SNa ?

Mode cible = MODE B

**FIG. 1**

Mode cible

Mode cible courant = Mode A
ET
Mode cible précédent = Mode B
?

OUI

Décision de changement de mode BA

NON

Mode cible courant = Mode B
ET
Mode cible précédent = Mode A
?

OUI

Décision de changement de mode AB

NON

Pas de changement de mode

**FIG. 2**

12

**FIG. 3A**

**FIG. 3B**

**FIG. 3C**

**FIG. 3D**

TOP changement
de mode
(t=0)

Etat des
coupleurs

Mode A.                                    Mode B

Fermé.

Coupleur A                                 Coupleur B

Ouvert

DWa.

Phase 0 | Phase 1b | Phase 2b | Phase 3b | Phase 4b | Phase 0

DWb

Sb
0
-Sb

t

0

**FIG. 4**

DWa

EP 1 561 624 B1

15

FIG. 5

Attente décision
changement de mode
Phase 0

Mode B
demandé ?

NON

Mode A
demandé ?

NON

OUI

OUI

OUI

OUI

Changement de
mode BA en cours ?

Changement de
mode AB en cours ?

OUI

OUI

NON

NON

Phase
1a en
cours ?

Phase 1b

Phase 1a

Phase
1b en
cours ?

NON

NON

IDWbI ≤ Sb ?

NON

IDWaI ≤ Sa ?

NON

NON

OUI

OUI

Phase
4a en
cours ?

OUI

Phase 2b

Phase 2a

OUI

Phase
4b en
cours ?

NON

NON

Coupleur B
fermé ?

NON

Coupleur A
fermé ?

NON

OUI

OUI

Phase 3b

Phase 3a

NON

NON

NON

Temporisation
phase 3b
écoulée ?

NON

Temporisation
phase 3a
écoulée ?

NON

OUI

OUI

Phase 4b

Phase 4a

NON

NON

Coupleur A
ouvert ?

NON

Coupleur B
ouvert ?

NON

OUI

OUI

FIN changement de
mode AB

FIN changement de
mode BA

# FIG. 6

## FIG. 7

## FIG. 8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1090792 A

- FR 2823281